# EUROPÄISCHE PATENTSCHRIFT

(11) **EP 1 453 708 B1**
(45) Veröffentlichungstag und Bekanntmachung des Hinweises auf die Patenterteilung: **27.02.2008**
(21) Anmeldenummer: 02754301.6
(22) Anmeldetag: 02.07.2002
(51) Int. Cl.: B60S 1/34, B60S 1/36

(54) **SCHEIBENWISCHVORRICHTUNG, INSBESONDERE FÜR EIN KRAFTFAHRZEUG**
WINDSCREEN WIPER DEVICE, IN PARTICULAR FOR A MOTOR VEHICLE
DISPOSITIF D'ESSUIE-GLACE NOTAMMENT DESTINE A UN VEHICULE

(30) Priorität: 30.11.2001 DE 10159052
(43) Veröffentlichungstag der Anmeldung: 08.09.2004
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2002/002396
(87) Internationale Veröffentlichungsnummer: WO 2003/047929

(56) Entgegenhaltungen:
- EP-A- 0 148 420
- DE-A- 3 733 620
- DE-A- 4 229 992
- US-A- 2 915 772
- PATENT ABSTRACTS OF JAPAN vol. 007, no. 280 (E-216), 14. Dezember 1983 (1983-12-14) & JP 58 159073 A (TOKYO SHIBAURA DENKI KK), 21. September 1983 (1983-09-21)
- PATENT ABSTRACTS OF JAPAN vol. 1998, no. 14, 31. Dezember 1998 (1998-12-31) & JP 10 258707 A (DENSO CORP), 29. September 1998 (1998-09-29)

## Beschreibung

### Stand der Technik

Die Erfindung betrifft eine Scheibenwischvorrichtung nach Gattung des unabhängigen Anspruchs 1.

Es sind schon zahlreiche Scheibenwischvorrichtungen mit einem Viergelenk bekannt, beispielsweise aus der DE 44,44 066, die einen Wischerarm aufweisen, der an zwei Anlenkpunkten von zwei Kurbeln gehalten und angetrieben wird, und somit eine Hub-Schwenkbewegung ausführt. Diese Scheibenwischvorrichtungen weisen einen Wischerarm auf, der aus einem Gelenkteil besteht, an dem ein Wischblatt angelenkt ist. Das Gelenkteil ist mit einem Befestigungsteil verbunden, welches mittels zweier Kurbeln an der übrigen Scheibenwischvorrichtung befestigt ist. Eine der beiden Kurbeln wird dabei kausal durch ein Antriebsaggregat pendelnd oder rotierend angetrieben, wodurch sich eine Schwenkbewegung entlang eines Kreisrundbogenabschnittes für den Wischerarm ergibt. Zur Erzeugung eines Hubs des Wischerarms ist die zweite Kurbel drehbar an der Wischvorrichtung oder an der Fahrzeugkarosserie befestigt, und nicht angetrieben, weshalb diese auch häufig als Lenkerkurbel bezeichnet wird, da sie dem Befestigungsteil nur einen Freiheitsgrad in der Bewegung nimmt. Die Hübe sind dabei jedoch sehr begrenzt, was insbesondere bei sehr großen Scheiben nachteilig ist, da der Wischerarm nur sehr begrenzt in die beifahrerseitige Ecke der Windschutzscheibe vordringen kann.

### Vorteile der Erfindung

Die erfindungsgemäße Scheibenwischvorrichtung mit dem Merkmalen des Hauptanspruchs hat den Vorteil, dass größere Hübe des Scheibenwischerarms erzeugt werden können und damit eine verbesserte Sicht für den Fahrer des Kraftfahrzeugs erzielt wird. Dies wird dadurch erzielt, dass ein Wischerarm mit dem Wischblatt an einem ersten Anlenkpunkt mittels einer ersten Kurbel und einem zweiten Anlenkpunkt mittels einer zweiten Kurbel drehbeweglich befestigt ist und die Kurbeln an zwei verschiedenen Anlenkpunkten an der Scheibenwischvorrichtung oder der Fahrzeugkarosserie angelenkt sind. Die Scheibenwischvorrichtung weist dabei Mittel auf, mit denen der Abstand zwischen den beiden Anlenkpunkten der Kurbel am Wischerarm während eines Wischzyklus verändert werden kann.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn der Abstand zwischen den Anlenkpunkten in Abhängigkeit der Position des Wischerarms veränderbar ist, um das Wischfeld der Scheibenwischvorrichtung optimal auf die Bedürfnisse ausrichten zu können, insbesondere den Hub des Wischerarmes derart einstellen zu können, dass möglichst weit in die obere Beifahrer-seitige Ecke der Windschutzscheibe vorgedrungen werden kann.

Dabei ist es als besonders vorteilhaft anzusehen, wenn die Mittel als Schubgelenk ausgebildet sind, um einen geräusch- und verschleißarmen Betrieb zu gewährleisten.

Werden beide Kurbeln zumindest pendelnd kausal angetrieben, so muß der Hub zwischen den beiden Anlenkpunkten nicht separat gesteuert werden. Dies ist dann besonders vorteilhaft, wenn beide Kurbeln mittels einer Schubstange verbunden sind und somit die Bewegung der einen, direkt angetriebenen Kurbel auf die zweite Kurbel zu übertragen ohne weitere Antriebselemente verwenden zu müssen.

Weist mindestens eine Kurbel ein Knie auf, in dessen Bereich die Schubstange angelenkt ist, so ist die Scheibenwischvorrichtung besonders platzsparend im Kraftfahrzeug unterzubringen, da sie nur wenig Bauraum unterhalb der Windschutzscheibe des Fahrzeugs benötigt.

Weiterhin ist es vorteilhaft, wenn der Wischerarm ein Gelenkteil und ein Befestigungsteil aufweist und die Anlenkpunkte am Befestigungsteil angeordnet sind. Auf diese Weise kann das Gelenkteil wie allgemein üblich vom Befestigungsteil abgeklappt werden, wodurch ein leichter und schneller Wechsel des Wischblatts ermöglicht wird.

Besonders vorteilhaft ist es, wenn der Wischerarm im Betrieb eine Drehbewegung um eine Drehachse vollführt und die Drehachse des Wischerarms an mindestens einem, vorzugsweise an beiden Anlenkpunkten etwa senkrecht auf der vom Wischerarm/-blatt überstrichenen Fläche steht.

### Zeichnung

Ein Ausführungsbeispiel der Erfindung ist in den Zeichnungen dargestellt und in der nachfolgenden Beschreibung näher erläutert. Es zeigen:
Figur 1 eine Scheibenwischvorrichtung mit einem Viergelenk in schematischer Darstellung,
Figur 2 ein Viergelenk einer erfindungsgemäßen Scheibenwischvorrichtung in schematischer Darstellung,
Figur 3 dieselbe Scheibenwischvorrichtung wie in Figur 2, jedoch in Strecklage mit maximalem Hub,
Figur 4 wie in Figur 3, jedoch in der Umkehrstellung,
Figur 5a den Arbeitsbereich zwischen Park- und Strecklage einer erfindungsgemäßen Scheibenwischvorrichtung bei gleichsinniger Drehrichtung,
Figur b den Arbeitsbereich zwischen Streck- und Umkehrlage bei gegensinniger Drehrichtung,
Figur 6 ein Viergelenk einer erfindungsgemäßen Scheibenwischvorrichtung mit Schubstange und Knie in einer Parkstellung,
Figur 7 ein Viergelenk einer erfindungsgemäßen Scheibenwischvorrichtung mit Knie in der Strecklage,
Figur 8 die selbe Vorrichtung wie in Figur 7, jedoch in Umkehrstellung.

### Beschreibung der Ausführungsbeispiele

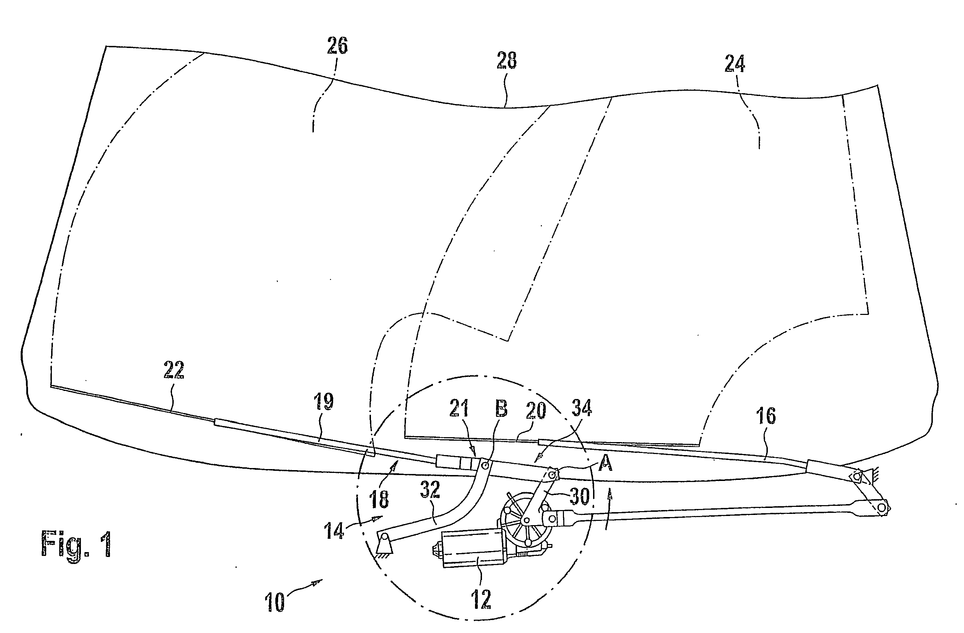

Figur 1 zeigt eine erfindungsgemäße Scheibenwischvorrichtung 10 mit einem Viergelenk. Sie besteht im wesentlichen aus einem Antriebsaggregat 12, welches als reversierender oder umlaufender Elektromotor ausgebildet ist, einem Getriebe 14, welches in Form eines Viergelenks ausgebildet ist und den Wischerarmen 16, 18, die die Wischblätter 20, 22 tragen und die im Betrieb über eine fahrerseitige bzw. beifahrerseitige Wischfläche 24, 26 streichen. Der beifahrerseiteige Wischerarm 18 besteht dabei im wesentlichen aus einem, dem Wischblatt 22 zugwandten Gelenkteil 19 und einem Befestigungsteil 21.

Das Getriebe 14 weist eine erste Kurbel 30 auf, welche kausal vom Antriebsaggregat 12 direkt angetrieben wird und am gelenkteilabgewandten Ende des Befestigungsteils 21 angelenkt ist und einer zweiten Kurbel 32, die einerseits an einem festen Punkt der Wischvorrichtung und andererseits am Befestigungteil 21 des beifahrerseitigen Wischerarms 18 angelenkt ist. Die erste Kurbel 30 ist damit am Wischblattabgewandten Ende des Wischerarms 18, an einem ersten Anlenkpunkt A und die zweite Kurbel 32 an einem vom ersten Anlenkpunkt A verschiedenen, zweiten Anlenkpunkt B drehbeweglich befestigt.

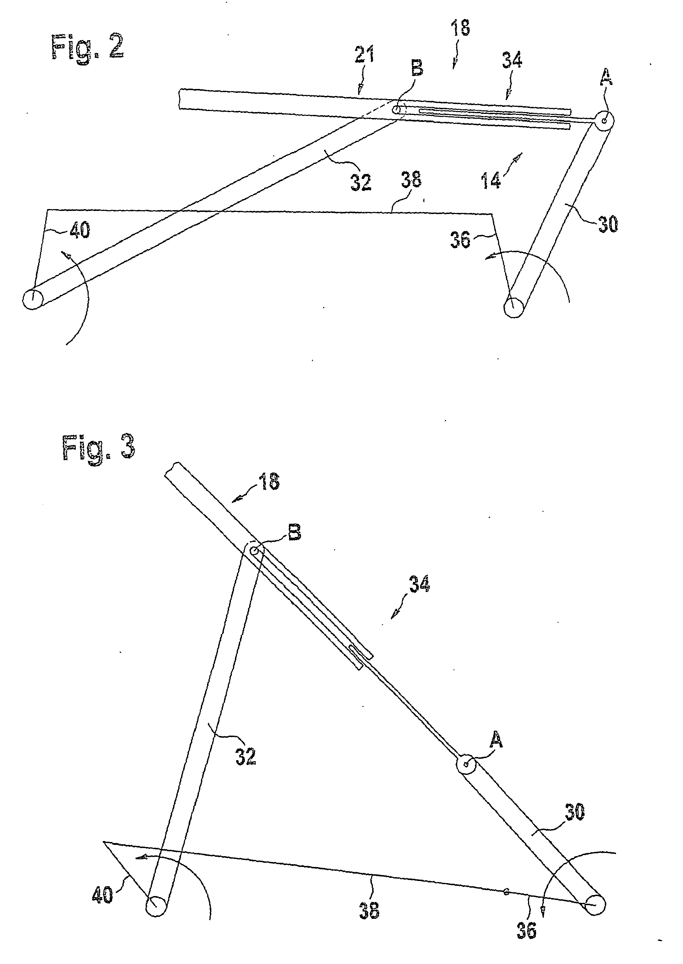

In Figur 2 ist das Getriebe 14 einer erfindungsgemäßen Scheibenwischvorrichtung 10 schematisch dargestellt. Der beifahrerseitige Wischerarm 18 weist am Wischblattabgewandten Ende, also am Befestigungsteil 21 ein Schubgelenk 34 auf, welches aus zwei linear verschiebbaren Elementen besteht. Die erste Kurbel 30 ist an einem Element angelenkt und die zweite Kurbel 32 am anderen Element des Schubgelenks 34, so dass der Abstand zwischen den Anlenkpunkten A und B der Kurbeln 30, 32 veränderbar ist.

Mit der ersten Kurbel 30 ist ein erster Winkelhebel 36 drehfest verbunden, der sich im Betrieb durch den Antrieb der ersten Kurbel 30 mit dieser mitbewegt. An diesem ersten Winkelhebel 36 ist eine Schubstange 38 angelenkt, welche einen drehfest mit der zweiten Kurbel 32 verbundenen zweiten Winkelhebel 40 bewegt. Durch diesen wird die zweite Kurbel 32 ebenso vom Antriebsaggregat 12 kausal bewegt. Die hier gezeigte Stellung des Getriebes 14 entspricht der Parkstellung.

In Figur 3 ist dieselbe Anordnung wie in Figur 2, jedoch in der Strecklage gezeigt. Hier ist der maximale Hub zwischen den beiden Elementen des Schubgelenks 34 erreicht, so dass die beiden Anlenkpunkt A, B den im Zyklus größten Abstand voneinander aufweisen.

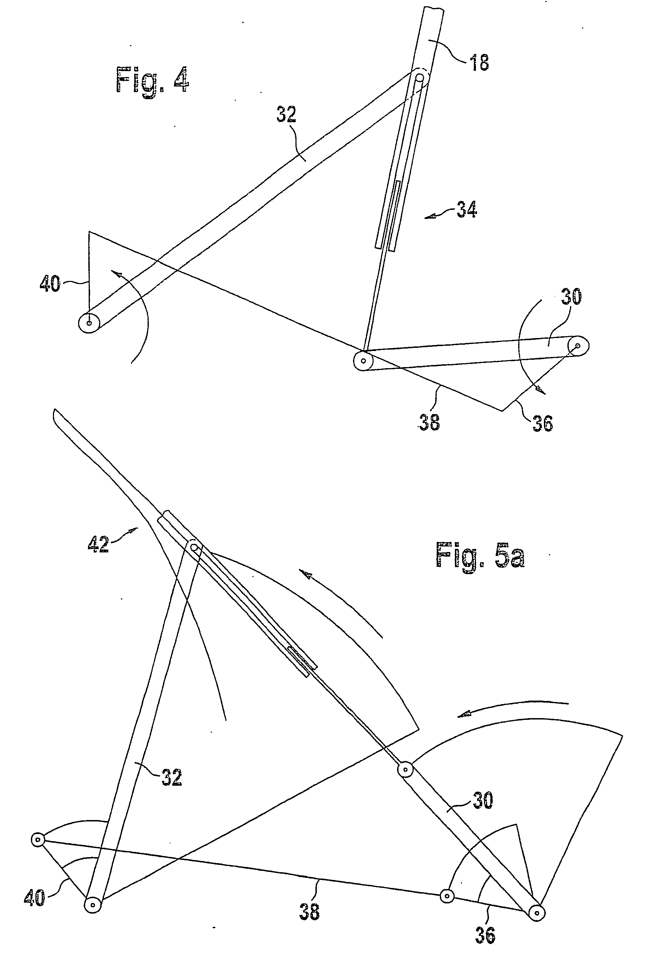

In Figur 4 ist das Getriebe 14 in der Umkehrlage gezeigt. Das Schubgelenk 34 ist dabei teilweise zusammengeschoben, so dass der Abstand zwischen den beiden Anlenkpunkten A, B größer als der minimale Abstand, aber kleiner als der maximale Abstand ist. In dieser Umkehrlage geht die Bewegung des beifahrerseitigen Wischerarms 18 gerade von der Aufwärts- in die Abwärtsbewegung über.

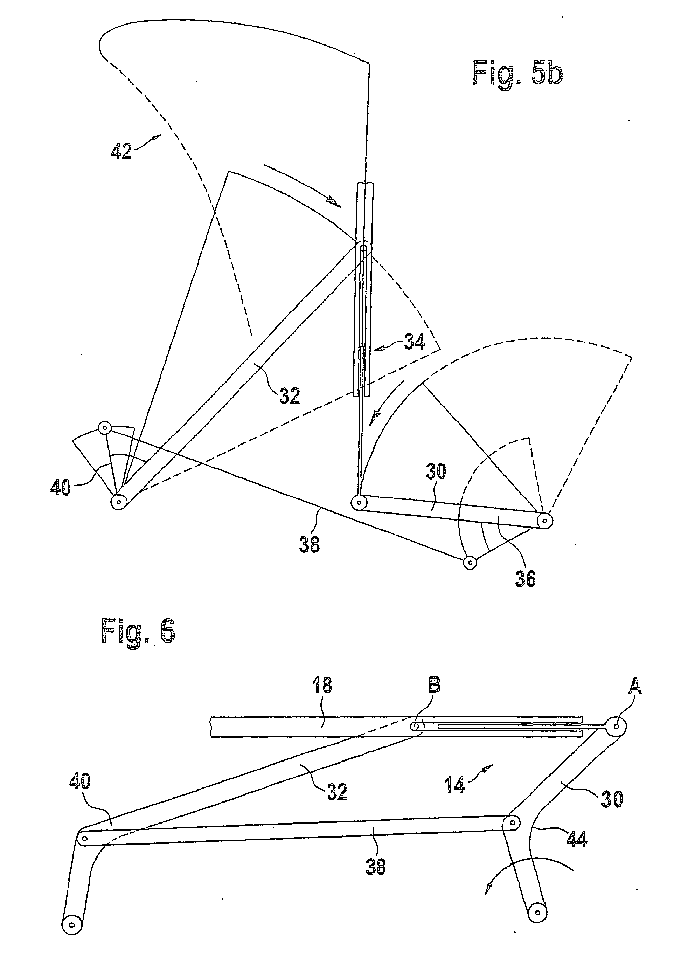

Figur 5a zeigt die gleiche Vorrichtung wie in den vorhergehenden Figuren. Die Kennlinie 42 zeigt die Bewegung des Wischerarms zwischen Park- und Strecklage, also während dem Bereich, während dem die erste Kurbel 30 die gleiche Drehrichtung wie die zweite Kurbel 32 beschreibt. In Figur 5b ist der anschließende Arbeitsbereich zwischen Streck- und Umkehrlage gezeigt, also genau der Bereich, in dem die zweite Kurbel 32 ihre Drehrichtung gegenüber der ersten Kurbel 30 umgekehrt hat.

In Figur 6 ist eine Variation des Getriebes 14 einer erfindungsgemäßen Scheibenwischvorrichtung 10 dargestellt. Der erste Winkelhebel 36 und der zweite Winkelhebel 40 sind entfallen und die Schubstange 38 ist direkt an den Kurbeln 30, 32 angelenkt.

Dazu weist die erste Kurbel 30 und die zweite Kurbel 32 an den Anlenkpunkten der Schubstange 38 ein erstes Knie 44 und ein zweites Knie 46 auf. Das Getriebe 14 ist hier in der Parkstellung gezeigt, die im wesentlichen der Unteren Umkehrlage entspricht.

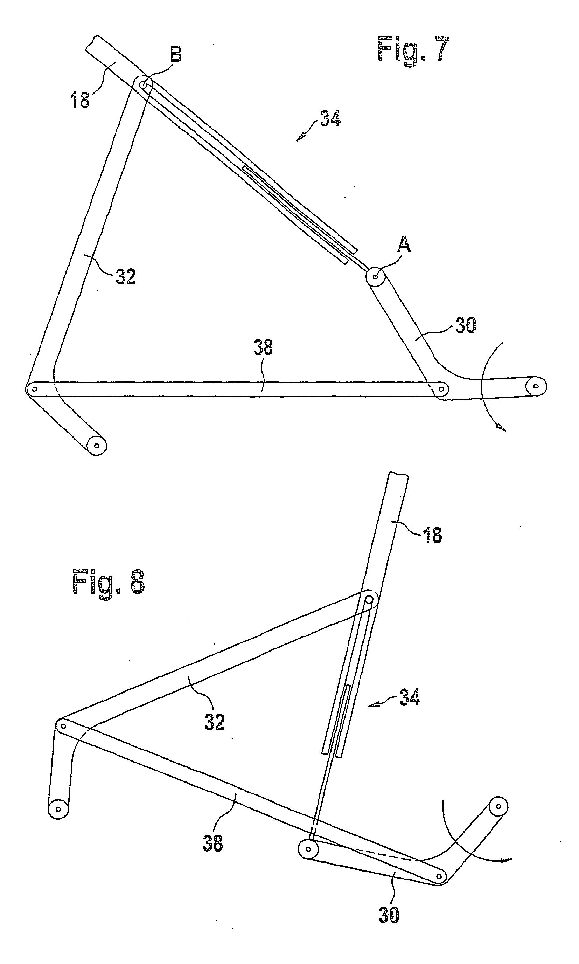

Figur 7 zeigt dasselbe Getriebe wie Figur 6 in der Strecklage, in der der Abstand zwischen dem ersten Anlenkpunkt A und dem zweiten Anlenkpunkt B maximal ist.

In Figur 8 ist wiederum das Getriebe aus Figur 6, dieses Mal in der Umkehrstellung dargestellt.

Es sind prinzipiell verschiedenste Kombinationen der hier gezeigten Merkmale möglich, beispielsweise kann das Schubgelenk 34 über den zweiten Anlenkpunkt B, in Richtung des Wischblattes 22 hinausgehen, so dass der zweite Anlenkpunkt B beispielsweise in der Mitte der Längserstreckung des Schubgelenks 34 angeordnet ist. Ebenso ist es möglich, die beiden Kurbeln 30, 32 mit Hilfe jeweils eines Motors kausal anzutreiben oder die zweite Kurbel 32 anstatt mit der Schubstange 38, mit Hilfe eines Zahnrads, Ketten- oder Seilzug-Getriebes durch die erste Kurbel 30 anzutreiben. In einer weiteren Variation kann die zweite Kurbel 32 auch ohne Antrieb versehen sein, wenn der Abstand zwischen den Anlenkpunkten A und B, beispielsweise hydraulisch oder pneumatisch, durch das Schubgelenk 34 geregelt ist.

## Patentansprüche

1. Scheibenwischvorrichtung, insbesondere für ein Kraftfahrzeug, mit einem Wischerarm (18), der mindestens ein Wischblatt (22) zu tragen vermag und an mindestens einem ersten Anlenkpunkt (A) mittels einer ersten Kurbel (30) und einem, vom ersten Anlenkpunkt (A) verschiedenen zweiten Anlenkpunkt (B) mittels einer zweiten Kurbel (32) drehbeweglich befestigt ist, und die Kurbeln (30, 32) weiterhin an zwei unterschiedlichen, von den Anlenkpunkten (A, B) verschiedenen Befestigungspunkten angelenkt sind, **dadurch gekennzeichnet, daß** Mittel (34) zur Veränderung des Abstandes zwischen den beiden Anlenkpunkten (A, B) vorgesehen sind.

2. Scheibenwischvorrichtung nach Anspruch 1, **dadurch gekennzeichnet, daß** der Abstand zwischen den beiden Anlenkpunkten (A, B) in Abhängigkeit der Position des Wischerarms (18) veränderbar ist.

3. Scheibenwischvorrichtung nach einem der vorhergehenden Ansprüche, **dadurch gekennzeichnet, daß** die Mittel (34) als Schubgelenk ausgebildet sind.

4. Scheibenwischvorrichtung nach einem der vorhergehenden Ansprüche, **dadurch gekennzeichnet, daß** beide Kurbeln (30, 32) zumindest pendelnd kausal angetrieben werden.

5. Scheibenwischvorrichtung nach einem der vorhergehenden Ansprüche, **dadurch gekennzeichnet, daß** beide Kurbeln (30 ,32) zumindest mittelbar durch eine Schubstange (38) verbunden sind.

6. Scheibenwischvorrichtung nach Anspruch 5, **dadurch gekennzeichnet, daß** mindestens eine Kurbel (30, 32) ein Knie (44, 46) aufweist, in dessen Bereich die Schubstange (38) angelenkt ist.

7. Scheibenwischvorrichtung nach einem der vorhergehenden Ansprüche, **dadurch gekennzeichnet, daß** der Wischerarm (18) ein Gelenkteil (19) und ein Befestigungsteil (21) aufweist und die Anlenkpunkte (A, B) am Befestigungsteil (21) angeordnet sind.

8. Scheibenwischvorrichtung nach einem der vorhergehenden Ansprüche, **dadurch gekennzeichnet, daß** der Wischerarm (18) im Betrieb zumindest eine teilweise Drehbewegung um eine Drehachse vollführt und die Drehachse des Wischerarms (18) an mindestens einem, vorzugsweise an beiden Anlenkpunkten (A, B) im wesentlichen senkrecht auf der vom Wischerarm (18) im Betrieb überstrichenen Fläche steht.

## Claims

1. Windscreen wiper device, in particular for a motor vehicle, with a wiper arm (18) which is capable of supporting at least one wiper blade (22) and is fastened rotatably to at least one first coupling point (A) by means of a first crank (30) and to a second coupling point (B), which is different from the first coupling point (A), by means of a second crank (32), and the cranks (30, 32) are furthermore coupled to two different fastening points which are different from the coupling points (A, B), **characterized in that** means (34) for changing the distance between the two coupling points (A, B) are provided.

2. Windscreen wiper device according to Claim 1, **characterized in that** the distance between the two coupling points (A, B) can be changed as a function of the position of the wiper arm (18).

3. Windscreen wiper device according to one of the preceding claims, **characterized in that** the means (34) are designed as a sliding joint.

4. Windscreen wiper device according to one of the preceding claims, **characterized in that** the two cranks (30, 32) are driven causally at least in an oscillating manner.

5. Windscreen wiper device according to one of the preceding claims, **characterized in that** the two cranks (30, 32) are connected at least indirectly by a connecting rod (38).

6. Windscreen wiper device according to Claim 5, **characterized in that** at least one crank (30, 32) has a knee (44, 46) in the region of which the connecting rod (38) is coupled.

7. Windscreen wiper device according to one of the preceding claims, **characterized in that** the wiper arm (18) has an articulated part (19) and a fastening part (21), and the coupling points (A, B) are arranged on the fastening part (21).

8. Windscreen wiper device according to one of the preceding claims, **characterized in that** the wiper arm (18) executes at least one partial rotational movement about an axis of rotation during operation, and the axis of rotation of the wiper arm (18) at at least one, preferably at both coupling points (A, B), is essentially perpendicular to the surface over which the wiper arm (18) sweeps during operation.

## Revendications

1. Dispositif d'essuie-glace, notamment pour un véhicule automobile comportant un bras d'essuie-glace (18) portant au moins un balai d'essuie-glace (22) et fixé de manière mobile en rotation à au moins un point d'articulation (A) à l'aide d'une première manivelle (30) et à un second point d'articulation (B), différent du premier point d'articulation (A), à l'aide d'une seconde manivelle (32), les manivelles (30, 32) étant en outre articulées en deux points de fixation différents des points d'articulation (A, B),
**caractérisé par**
des moyens pour modifier la distance entre les deux points d'articulation (A, B).

2. Dispositif d'essuie-glace selon la revendication 1,
**caractérisé en ce que**
la distance entre les deux points d'articulation (A, B) est variable en fonction de la position du bras d'essuie-glace (18).

3. Dispositif d'essuie-glace selon l'une des revendications précédentes,
**caractérisé en ce que**
les moyens (34) sont constitués par une articulation coulissante.

4. Dispositif d'essuie-glace selon l'une des revendications précédentes,
**caractérisé en ce que**
les deux manivelles (30, 32) sont entraînées au moins de façon causale suivant un mouvement pendulaire.

5. Dispositif d'essuie-glace selon l'une des revendications précédentes,
**caractérisé en ce que**
les deux manivelles (30, 32) sont reliées au moins indirectement par une tige de poussée (38).

6. Dispositif d'essuie-glace selon la revendication 5,
**caractérisé par**
au moins une manivelle (30, 32) ayant un coude (44, 46) et la tige de poussée (38) est articulée au niveau de ce coude.

7. Dispositif d'essuie-glace selon l'une des revendications précédentes,
**caractérisé en ce que**
le bras d'essuie-glace (18) comporte une pièce d'articulation (19) et une pièce de fixation (21) et les points d'articulation (A, B) sont prévus sur la pièce de fixation (21).

8. Dispositif d'essuie-glace selon l'une des revendications précédentes,
**caractérisé en ce que**
en fonctionnement le bras d'essuie-glace (18) effectue au moins un mouvement de rotation partiel autour d'un axe de rotation et l'axe de rotation du bras d'essuie-glace (18) est prévu en au moins l'un et de préférence les deux points d'articulation (A, B) pratiquement dans la direction perpendiculaire à la surface balayée par le bras d'essuie-glace (18) en fonctionnement.
